# EUROPEAN PATENT APPLICATION

(11) **EP 4 618 041 A1**
(43) Date of publication of application: **17.09.2025**
(21) Application number: 24163669.5
(22) Date of filing: 14.03.2024
(51) Int. Cl.: G06V 10/82, G06V 20/52, G06V 20/70

(54) **A METHOD FOR PROCESSING IMAGES TO IDENTIFY OBJECTS WITHIN AN ENVIRONMENT**

(71) Applicant: British Telecommunications public limited company, London E1 8EE (GB)
(72) Inventor: The designation of the inventor has not yet been filed
(74) Representative: British Telecommunications public limited company Intellectual Property Department

(57) **Abstract**

A computer implemented method is defined. The method comprises receiving an image of an environment; providing the image to a trained multi-modal large language model trained to identify one or more objects within the image and a position of each of the one or more objects within the image and output text identifying the one or more objects and the positions of the one or more objects; receiving from the multi-modal large language model the output text; forming a record of the environment using the output text of the multi-modal large language model, wherein the record of the environment comprises an identification of the one or more objects in the environment and the position of the one or more objects in the environment; and querying the record to determine an identity and/or a position of an object of the one or more objects.

## Description

The present disclosure relates to using a multi-modal large language model to process images of an environment and identify objects and positions of objects in the environment.

### BACKGROUND

Images of environments such as computing or telecommunication environments or outdoor environments are often taken and stored. For example, a computing or telecommunications environment may have CCTV cameras that capture regular images of the environment. In addition, outdoor environments may be photographed by members of the public who may contribute their photos to public stores of photos or by engineers visiting objects such as telephone poles or telecommunication street cabinets in the outdoor environment. At present while these images are often stored they are not used to determine any information about objects in the environments and the objects in the environment and the condition or status of the objects needs to be determined manually.

The examples described herein are not limited to examples which solve problems mentioned in this background section.

### SUMMARY

Examples of preferred aspects and embodiments of the invention are as set out in the accompanying independent and dependent claims.

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

A first aspect of the disclosed technology defines a computer implemented method comprising: receiving an image of an environment; providing the image of the environment to a trained multi-modal large language model, the trained multi-modal large language model trained to identify one or more objects within the image of the environment and a position of each of the one or more objects within the image, and output output text identifying the one or more objects and the positions of the one or more objects within the environment; receiving from the multi-modal large language model the output text identifying the one or more objects and the position of the one or more objects within the environment; forming a record of the environment using the output text of the multi-modal large language model, wherein the record of the environment comprises an identification of the one or more objects in the environment and the position of the one or more objects in the environment; and querying the record to determine an identity and/or a position of an object of the one or more objects. The use of a trained multi-modal large language model to identify objects and positions of objects within an environment allows users to interact with images and reason over their content without having to train them to explicitly identify certain characteristics. Therefore, these models can generalise better to unseen information and provide richer context and reasoning over these images.

In some examples, the trained multi-modal large language model is further trained to identify a condition of the one or more objects within the image of the environment; the output text further identifies the condition of the one or more objects; the record further comprises an identification of the condition of the one or more objects; the querying the record to determine the identity or the position of an object of the one or more objects further comprises querying the record to determine the condition of an object of the one or more objects by comparing the identified condition of the object to a stored record indicating an expected condition of the object; and the method further comprises if the identified condition of the object has deteriorated from the expected condition of the object beyond a threshold amount, outputting a warning that the object needs replacement or repair. Thus, the method can be used to automatically monitor objects in an environment and alert a user or engineer if objects require replacement or repair. This reduces a need for manual monitoring and can also increase the accuracy of monitoring reducing the risk of an object being destroyed, or in the case of a large object such as a tree, causing damage to other objects or people.

In some examples, the image of the environment shows the environment at a first date and/or time; the record of the environment further comprises a timestamp indicating the first date and/or time; and querying the record to determine an identity and/or a position of an objection of the one or more objects further comprises querying the record to determine the timestamp associated with the identity or position of the object. This enables a record of when images are taken of the object to be easily kept and queried. This can then be used for example, if images are taken when objects are serviced to determine a time since the last service or provide an indicate as to how often an object has been serviced. This can be used to confirm whether the object is being managed/serviced correctly to ensure it maintains its function.

When timestamps are used, the method can further comprise receiving a second image of the environment, wherein the second image of the environment shows the environment at a second date and/or time different from the first date and/or time; providing the second image of the environment to the trained multi-modal large language model; receiving from the trained multi-modal large language model a second output text identifying one or more objects and a position of the one or more objects within the environment at the second date and/or time; forming a second record of the environment using the second output text of the trained multi-modal large language model, wherein the second record of the environment comprises an identification of the one or more objects in the environment, the position of the one or more objects in the environment, and a second timestamp indicating the second date and/or time; and comparing the second record and the record to determine a change in the one or more objects in the environment. This enables a position/location and or condition of an object to be tracked over time. This also enables details about how the environment is changing to be established.

In some examples, the environment comprises an environment housing one or more computing devices and/or telecommunications devices, the trained multi-modal large language model is trained to identify the one or more computing devices and/or telecommunications devices and a position for each of the one or more computing devices and/or telecommunications devices; the output text identifies the one or more computing devices and/or telecommunications devices and the position of the one or more computing devices and/or telecommunications devices; the record of the environment comprises the identification of the one or more computing devices and/or telecommunications devices and the position for each of the one or more computing devices and/or telecommunications devices; the querying the record to determine the identity or the position of an object of the one or more objects comprises comparing an identity of a computing device or telecommunications device at a particular position as indicated by the record of the environment with an identity of the computing device or telecommunications device at the particular position as indicated by a stored record of the environment, wherein the stored record of the environment indicates an expected identity of computing devices and/or telecommunications devices in each position; and the computer-implemented method further comprises in response to the identity of the computing device or telecommunications device not matching an expected identity of the computing device or telecommunications device at the particular position, outputting a warning that the computing device or telecommunications device is incorrect or may not function as expected. Thus, the method can be used to validate a computing or telecommunications environment and confirm, for example, that the server stacks and/or telecommunications cabinets contain the expected devices.

In the above example, the environment may comprise a telephone exchange; and the one or more objects may comprise telephone switches and computing devices that implement telephone exchange functionality. Thus, the method can be used to monitor telephone exchange equipment and validate the functioning of such equipment.

In some examples, the environment comprises an outdoor environment comprising one or more items of street furniture; the trained multi-modal large language model is trained to identify the one or more items of street furniture and a position for each of the one or more items of street furniture; the output text identifies the one or more items of street furniture and the position of each of the one or more items of street furniture; the record of the environment comprises the identification of the one or more items of street furniture and the position for each of the one or more items of street furniture; and the querying the record to determine the identity or the position of an object of the one or more objects comprises requesting a position of an item of street furniture of the one or more items of street furniture. In some examples the position can comprise a geolocation of the item of street furniture based on a geolocation identified from the image or otherwise associated with the image. In other examples, the position comprises a relative position of the item of street furniture relative to other objects in the image. In either case, this enables items of street furniture to be located more easily. This can then be used to update, for example, a map indicating the location of items of street furniture.

In the above example, the one or more items of street furniture can comprise at least one of a telephone pole, a telephone box, a mobile phone mast and a telephone street cabinet or junction box. This enables the method to be used by a telephone engineer to locate the object they wish to service more efficiently and to update records about the location of objects they wish to service.

In some examples, querying the record to determine an identity and/or a position of an object of the one or more objects further comprises: comparing the position of the object to a position of the object in a stored record; and in response to the position of the object not matching the position of the object in the stored record, either automatically updating the stored record or providing a warning indicating that the stored record is incorrect and should be updated. Thus, the method can be used to validate whether objects are at their expected location and provide warnings or update records if the objects are not at their expected location.

In some examples, the method further comprises training the multi-modal large language model using training data comprising training data pairs, wherein each training data pair comprises an image and text identifying one or more objects in the image and a position of each of the one or more objects in the image. Thus, the method can also comprise training of the multi-modal large language model.

In some examples, the trained multi-modal large language model comprises: a trained convolutional neural network trained to generate embeddings from an image and configured to input the embeddings to a pretrained large language model; and the pretrained large language model, wherein the pretrained large language model is retrained to provide an output text identifying the one or more objects in the environment and the position of the one or more objects within the environment. Thus, a known or existing large language model can be adapted to be multi-modal via a convolutional neural network. This allows the capabilities of existing large language models to be used for a new purpose.

In the above example, the trained convolutional neural network may be trained to generate embeddings from an image using training data comprising data pairs each comprising an image and labels of objects in the image. This provides a way to train a convolutional neural network to provide appropriate embeddings.

In some examples, the image comprises either a frame from a video captured by a video capture device or a still image captured by a camera or other imaging device. Thus, the above method can be used with either video from a video camera such as a CCTV camera or other video camera or still photos from a camera.

A second aspect relates to a computing device comprising: a processor; and a memory, the memory comprising instructions that when executed by the processor cause the processor to implement a method accord to any of the above examples.

A third aspect relates to a non-tangible computer readable storage medium comprising instructions that when executed by a processor cause the processor to implement a method according to any of the above examples.

It will also be apparent to anyone of ordinary skill in the art, that some of the preferred features indicated above as preferable in the context of one of the aspects of the disclosed technology indicated may replace one or more preferred features of other ones of the preferred aspects of the disclosed technology. Such apparent combinations are not explicitly listed above under each such possible additional aspect for the sake of conciseness.

Other examples will become apparent from the following detailed description, which, when taken in conjunction with the drawings, illustrate by way of example the principles of the disclosed technology.

### BRIEF DESCRIPTION OF THE DRAWINGS

Figure 1 is a flowchart illustrating a method for identifying objects in an environment;
Figure 2 illustrates an example telecommunications environment in which the method of Figure 1 can be used;
Figure 3 illustrated an example outdoor environment in which the method of Figure 1 can be used; and
FIG. 4 shows an example computing device that can be used to implement the method of Figure 1.

The accompanying drawings illustrate various examples. The skilled person will appreciate that the illustrated element boundaries (e.g., boxes, groups of boxes, or other shapes) in the drawings represent one example of the boundaries. It may be that in some examples, one element may be designed as multiple elements or that multiple elements may be designed as one element. Common reference numerals are used throughout the figures, where appropriate, to indicate similar features.

### DETAILED DESCRIPTION

The following description is made for the purpose of illustrating the general principles of the present technology and is not meant to limit the inventive concepts claimed herein. As will be apparent to anyone of ordinary skill in the art, one or more or all of the particular features described herein in the context of one embodiment are also present in some other embodiment(s) and/or can be used in combination with other described features in various possible combinations and permutations in some other embodiment(s).

This application relates to using a trained multi-modal large language models to analyse an image of an environment and determine a written record, inventory or itemization of one or more objects in the image and hence in the environment. The written record, inventory or itemization of one or more objects comprises at least an identification of the one or more objects in the image and an indication of a position of each of the one or more objects in the image. The written record, inventory or itemization can comprise a timestamp indicating a time and/or date at which the image of the environment was taken. The written record, inventory or itemization of one or more objects is then queried to determine details about the one or more objects in the image. In some examples, the querying the image can comprise confirming that an object of the one or more objects in the image (or environment) is an expected object, for example by confirming an object is an expected computing or telecommunications device. In other examples, querying the image can comprise determining a location or position of an object of the one or more objects within the image and hence the environment. This could be used, for example, to analyse images of an outdoor space to determine the location of street furniture, buildings or other outdoor objects such as trees, hedges and fences. These locations can then be used to validate or build a database or other datastore providing locations of the street furniture, buildings or other outdoor objects. In addition or as an alternative, these locations can be compared with stored locations from a database or other datastore of object locations to validate the database or datastore and/or confirm an object is in an expected position. In further examples, the trained multi-modal large language model can also be used to determine a condition of the one or more objects in the image and hence environment. The condition of the one or more objects can then be compared to either a record indicting an expected condition or a condition determined from a previous image to determine if the one or more objects are deteriorating and/or if any repair or other action needs to be performed on an object of the one or more objects.

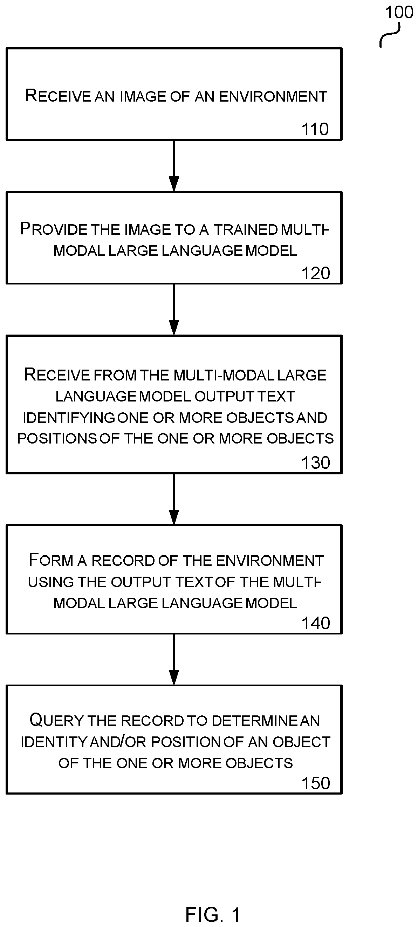

Figure 1 is a flowchart showing a computer-implemented method 100 for using a trained multi-modal large language model to analyse images for validating the objects and positions of objects in the image. In stage 110, the method comprises receiving an image of an environment. In some examples, the image may comprise a still or static image of the environment received from a camera or other image capture device. In other examples, the image may comprise a frame taken from a video of the environment. While in some examples, the method 100 can be repeated for all frames of the video, in other examples, a frame of video can be taken at a fixed time interval and the method only repeated for these frames. The fixed time interval could comprise a time interval of every minute, every hour, every day, once a week or once a month. In other examples, only a single frame of video may be used, and method 100 may be performed a single time or the method can be implemented on a user request.

At stage 120, the method 100 comprises providing the image of the environment to a trained multi-modal large language model. The trained multi-modal large language model is trained to identify one or more objects within the image and to determine a position or location of each of the one or more objects within the image, and hence environment. The trained multi-modal large language model is trained to output text identifying the one or more objects and the positions of the one or more objects within the environment. A multi-model large language model comprises a machine learning large language model that has been trained using input data in a mode in addition to textual input data. In the present application, the multi-modal large language model is trained using images in addition to or as an alternative to text. Any suitable process can be used to train the multi-modal large language model and such training would be within the knowledge of the skilled person. However, in some examples, a known large language model, such as LLaMa, GPT-4, Claude, Cohere, PaLM, BLOOM, LaMDA, Flan-UL2, Guanaco, Bard, BERT, and Orca, can be used then retrained using image data. In this retraining or in the initial training of the multi-model large language model, supervised learning can be used wherein the training data used to train the multi-modal large language model to process images comprise training data pairs, wherein each data pair comprises an input image and text, wherein the text describes objects in the input image and positions of objects within the input images.

In some examples, the input images can be turned into embeddings for processing by the multi-modal large language model using a convolutional neural network. The convolutional neural network can be trained using training data comprising training pairs wherein each training pair comprises an image and labels of objects in the image. The convolutional neural network is then trained by masking objects within the scene.

While the above describes methods of training a multi-modal large language model to provide identities of one or more objects in an image and a position of the objects in the image, any suitable method for training the multi-modal large language model could be used. In addition, any suitable method of turning the image into embeddings could also be used as appropriate.

As described above, the multi-modal large language model is trained to provide output text that identifies one or more objection in an input image and also a position of each of the one or more objects within the image and hence within the environment depicted in the image. At stage 130, the method comprises receiving the output text identifying the one or more objects and positions or locations of the one or more objects in the image and hence the environment depicted in the image from the multi-modal large language model.

In stage 140, the method comprises forming a record, inventory or itemization of the objects in the environment depicted in the image using the output text of the multi-modal machine learning model. In some examples, the record, inventory or itemization can comprise a store of the output text from the multi-modal machine learning model. In other examples, the record, inventory or itemization can comprise a list or table of the objects identified in the image/environment and their corresponding position. Such a list or table could be generated by extracting identifications of objects and their corresponding position from the output text of the multi-modal large language model in any suitable way. In further examples, the record, inventory or itemization can be further processed e.g. by alphabetisation, or storing objects in order of their location/position to enable easy reviewing and searching of the record, inventory or itemization. In all cases, the record, inventory or itemization comprises an identification of the one or more objects in the image/environment and a corresponding position or location of each of the one or more objects in the image/environment. The record, inventory or itemization can be stored in any suitable way that enables the record, inventory or itemization to later be queried or searched.

At stage 150, the method comprises querying the record, inventory or itemization to determine an identity or a position/location of an object of the one or more objects. The querying the record, inventory or itemization may comprise querying the record, inventory or itemization to determine that an object in the image and hence environment depicted by the image is an expected object. For example, the querying the record, inventory or itemization can comprise comparing the identity of the objects in the environment to a list, record, itemization or inventory of objects that are expected to be in the environment and confirming the presence or absence of the expected objects. In addition, this can comprise confirming that the identity of objects in the environment is correct, for example, this could comprise confirming that a computing or other electronic device is an expected make or model as defined by the list, record, itemization or inventory of objects in the environment. In some examples, the list, record, itemization or inventory of objects in the environment can be created using a first image of the environment via the trained multi-modal large language model. In other examples, the list, record, itemization or inventory could be human created or a pre-existing list, record, itemization or inventory that requires validation or checking. The querying the record, inventory or itemization may in addition or as an alternative comprise providing an indication of the position or location of an object relative to other objects, geographical locations or geographical coordinates in the image of the environment or identified in the image of the environment. For example, the querying the record, inventory or itemization can comprise asking for a location/position of an object in the environment to enable a user to find the object or update any records or databases about the positioning of objects. The querying the record, inventory or itemization may also comprise querying the record, inventory or itemization to validate a pre-existing record, list or database of objects and their corresponding locations. The fact that the output of the multi-model large language model is text descriptive of objects and their corresponding positions/locations which is then used to from the record, inventory or itemization enables such text based queries which enables the record, inventory or itemization to be used for various environment management functions.

While many uses of the above-mentioned features are anticipated, two specific use cases will now be discussed.

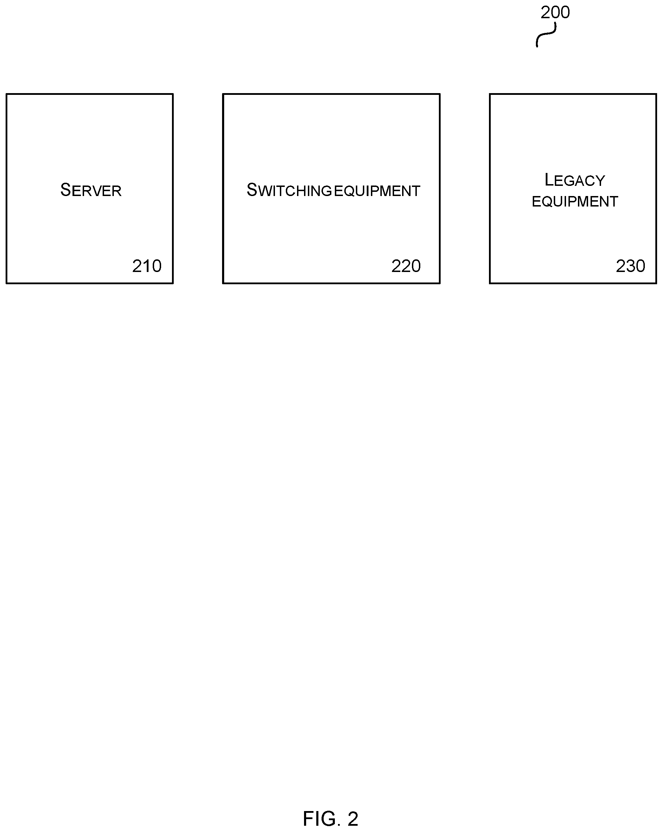

Figure 2 shows an environment 200 in which method 100 of Figure 1 may be used to manage and validate a computing or telecommunications environment. Figure 2 shows a telecommunications environment 200 which may comprise a telephone exchange, switching room or any other machine space. The telecommunications environment 200 comprises one or more computing devices 210 and one or more telecommunications devices 220, 230. While the specific environment in Figure 2 shows a server 210, switching equipment 220, and legacy equipment 230, the skilled person would understand this is merely exemplary and other or fewer computing and telecommunications devices may be present. For example, in the telecommunications environment 200 of Figure 2 only telecommunications devices may be present. In other examples, the environment may comprise a computing environment and only computing devices such as servers may be present. It is noted the telecommunications devices may comprise switching and routing equipment such as routers, MSANs, MSAGs, DSLAMs, and optical network equipment such as splitters and repeaters as opposed to individual telephones or mobile telephones etc.

The method 100 can be implemented in a computing or telecommunications environment 200 such as that shown in Figure 2 to validate the computing or telecommunications devices in the environment 200. For example, if a large amount of equipment is legacy equipment or a large amount of equipment with different performance requirements has recently been installed, a record of which server racks or telecommunications cabinets contain which equipment can be inaccurate. This means that the actual equipment may not function as desired. In addition, if equipment is present but in the incorrect place, this may mean functionality that should be assigned to one server or telecommunications device may instead to assigned to an incorrect device that either does not have the capabilities to perform the functionality or the capabilities of the incorrect device are underused.

In order to use method 100 to validate a computing or telecommunications environment, the multi-modal large language model is trained to identify one or more objects in an image by being trained to identify one or more computing devices and/or telecommunications devices in the image. Thus, in stage 120 of method 100, the providing a received image to a trained multi-modal large language model comprises providing the received image to a multi-modal large language model that is trained to identify one or more computing devices and/or telecommunications devices in the image. The trained multi-modal large language model being trained to identify one or more computing devices and/or telecommunications devices in the image comprises the trained multi-modal large language model being trained to identify a make, model number or other features of the computing devices and/or telecommunications devices. The other features may comprise features such as what types of modules are installed in a device and the makes/models of any modules installed in a device, how many spare ports/connectors are available on a device and/or how many ports/connectors on a device are available, how many ports are active on a device, and/or port/connector states on a device which may be represented by indictor lights on the device. This can enable a form/type/model of the one or more computing devices and/or telecommunications to be determined. In this regard, the multi-modal large language model can be trained with training data comprising the make, model number or other features of the one or more computing devices and/or telecommunications devices either as part of labelled pairs for training the convolutional neural network or as part of the text describing the training images.

The receiving form the multi-modal large language model output text identifying the one or more objects and positions/locations of the one or more objects in stage 130 of method 100 can thus comprise receiving an indication of which computing devices 210 and/or telecommunications devices 220, 230 are present in the image and hence the computing or telecommunications environment 200 and an indication of their position/location in terms of which server racks, cabinets, internal machine spaces, external machine spaces, street cabinets or other storage facilities the computing devices 210 and/or telecommunications devices 220, 230 are in. This can then be used to form a record, inventory or itemization of the computing devices 210 and/or telecommunications devices 220, 230 in stage 140 of method 100, wherein the record, inventory or itemization comprises an indication of what computing devices 210 and/or telecommunications devices 220, 230 are in the environment 200 and their location/position in the environment 200 in terms of what racks, cabinets or other storage facilities the computing devices 201 and/or telecommunications devices 220, 230 are located within.

A prior list, record, itemization or inventory of computing devices and/or telecommunications devices in the environment can exist. This prior list, record, itemization or inventory can comprise an indication of the computing devices and/or telecommunications devices that are expected in the environment, for example, the list, record, itemization or inventory can comprise a record of the computing devices and/or telecommunications devices generated at install or can comprise a record of a current best knowledge of the computing devices and/or telecommunications devices based on how they are used. The prior list, record, itemization or inventory comprises both a record of the computing devices and/or telecommunications devices and an indication of their position/location e.g. an indication of a server rack, cabinet or other storage location of the computing devices and/or telecommunications devices. When method 100 is being used to validate environment 200, then the querying the record, inventory or itemization in stage 150 comprises comparing identities and positions/locations of the one or more computing devices and/or telecommunications devices identified in the record, inventory or itemization formed in stage 140 to the identities and positions/locations of the one or more computing devices and/or telecommunications devices from the prior list, record, itemization or inventory. For example, this can involve determining for each location/position in the environment, e.g. each storage facility, that the computing devices and/or telecommunications devices identified are those that are indicated as being in the location/position in the prior list, record, itemization or inventory. If the computing devices and/or telecommunications devices are the expected devices, then no further action need be performed although an optional message can be sent to a user indicating the environment is validated in some examples. In contrast, if a computing device and/or telecommunications device at a particular position/location or in a particular storage facility is not the expected computing device and/or telecommunications device, the method further comprises outputting a warning that a computing device or telecommunications device is incorrect. A user can then either replace the computing device or telecommunications device with a correct computing device or telecommunications device or reroute data to ensure the presence of an incorrect computing device or telecommunications device does not impact performance of the entire system or network containing the computing device or telecommunications device.

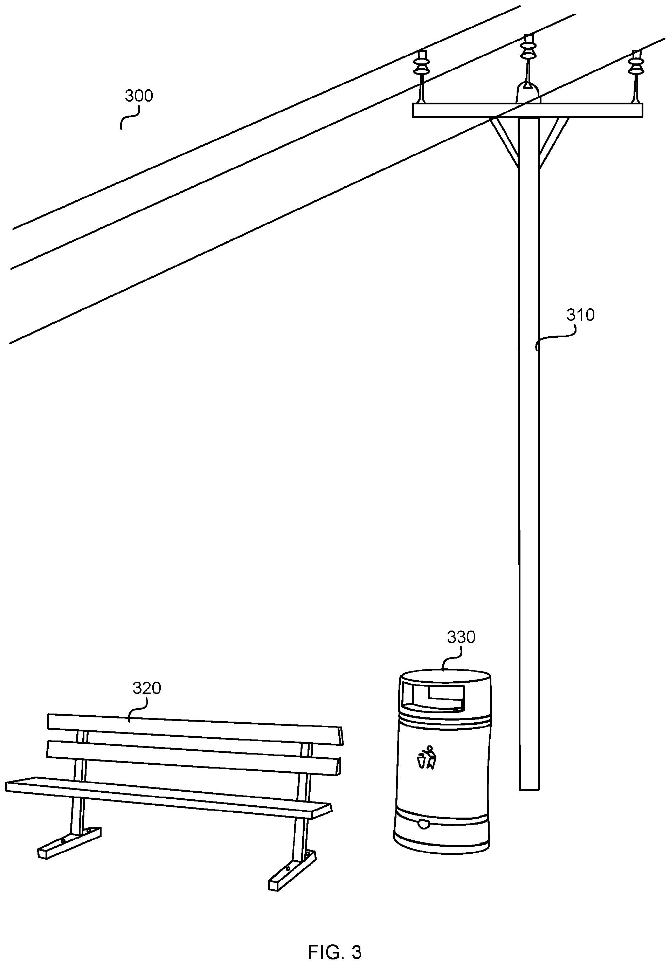

Figure 3 shows an environment 300 in which the method 100 can be used to determine a location or position of objects in an environment 300. In this example, environment 300 is an outdoor environment. However, in other examples, the environment 300 could also be an indoor environment or any other suitable environment 300. Figure 3 shows an outdoor environment 300 comprising three items of street furniture, a telephone pole 310, a bench 320 and a bin or trash can 330. While Figure 3 shows three items of street furniture, this is purely exemplary and in an outdoor environment fewer or more items of street furniture can be present. In addition, the items of street furniture shown are purely exemplary and other items of street furniture can also be present or the shown items may not be present. Existing records on the locations/positions of items of street furniture can be limited. For example, historical records may mean location data for items such as telephone poles are no longer comparable to modern street and location markers. In addition, the location/position of street furniture such as benches or trash cans may not be accurately recorded. Thus, it can be desirable to automatically update records about the location of these items to allow engineers, pedestrians or bin/trash collectors to correctly find necessary items of street furniture.

In the example where the environment 300 comprises an outdoor environment 300 comprising or more items of street furniture 310, 320, 330 then the trained multi-modal large language model is trained to identify the one or more items of street furniture and a position for each of the one or more items of street furniture. This can comprise the trained multi-modal large language model being trained using training pairs comprising images of outdoor environments containing items of street furniture and corresponding textual descriptions of the identity of the items of street furniture and their position within the image and hence environment depicted in the image. As the trained multi-modal large language model is trained to identify one or more items of street furniture and a position of each of the one or more items of street furniture, the output text received from trained multi-modal large language model in step 130 identifies the one or more items of street furniture 310, 320, 330 and the position of each of the on or more items of street furniture. In some examples, the position of the one or more items of street furniture 310, 320, 330 can comprise a position of the one or more items of street furniture relative to other objects or items of street furniture 310, 320, 330 in the image. In other examples, the images may be associated with a geolocation in the form of an address or geographical coordinates. In such a case the position of the one or more items of street furniture 310, 320, 330 may be a position based on the geolocation associated with the image. In some examples both a relative location compared to other objects in the image and a geolocation based on the image are provided as the position of the one or more items of street furniture 310, 320, 330. In addition, in some examples, the trained multi-modal large language model may output a position or location comprising a geolocation based on known maps or other location datastores and buildings or other location identifiers in the images.

The forming the record, inventory or itemization of the environment 300 in stage 140 comprises forming a record, inventory or itemization of the environment 300 that identifies the one or more items of street furniture 310, 320, 330 and the position of each of the one or more items of street furniture 310, 320, 330. In some examples, the forming the record, inventory or itemization of the environment 300 comprises extracting information from the output text of the multi-modal large language model and forming this into a searchable list, table or record. In other examples, the output text from the multi-modal large language model can be used to identify a geolocation of each the one or more items of street furniture 310, 320, 330 and the record, inventory or itemization can use this geolocation as a position of each of the one or more items of street furniture 310, 320, 330. In addition or as an alternative, if the image is associated with a geolocation then this can form part of the position of each of the one or more items of street furniture 310, 320, 330 in the record, inventory or itemization.

In stage 150 of method 100, the querying the record, inventory or itemization can comprise querying the record, inventory or itemization to determine a position of a particular item of street furniture of the one or more items of street furniture 310, 320, 330. The position of the particular item of street furniture may comprise a written description of the position relative to other objects or items of street furniture or a geolocation such as an address or geographical coordinates of the item of street furniture. This information can then be used by a user such as an engineer, pedestrian or bin/trash collector to locate the item of street furniture.

In some examples of the above, the item of street furniture is a telephone pole, mobile phone mast or telephone street cabinet or junction box. The records from when these items were installed can be inaccurate or be formed based on no longer valid geographical details e.g. old addresses. This can mean an engineer attempting to locate a telephone pole, mobile phone mast or telephone street cabinet or junction box to perform upgrades or repairs may need to search a geographical area for the telephone pole, mobile phone mast or telephone cabinet or junction box. The above method can allow existing databases of images to be analysed to locate these objects simplifying finding the objects for the engineer. In other examples, the item of street furniture is a bench, bin or other item of street furniture that is useful to a pedestrian. In such a case the above method enables existing databases of images to be analysed to determine the location of such items of street furniture which could then, for example, be displayed on a map enabling improved maps in terms of showing the public where useful facilities are located.

While in some examples, the method with respect to outdoor environment 300 can be performed to determine an otherwise unknown location or position for an item of street furniture, in other examples a database or record storing an expected location of items of street furniture, for example from installation records of items of street furniture can be validated. For example, the database or record can be an installation record for telephone poles, mobile phone masts or telephone cabinets or junction boxes etc. Such records may be inaccurate due to their age, due to inaccurate recording or due to use of old forms of geolocation to identify the location or position of items. Thus, it can be beneficial to validate or confirm such databases or records are accurate. Thus, in some examples stage 150 of querying a record, inventory or itemization further comprises comparing the position/location of an object such as an item of street furniture from the formed record, inventory or itemization to a position/location of the object in the record or database. If the location matches then no further action needs to be taken although, in some examples, a message indicating the location of the object has been validated is generated. In contrast, if the position/location does not match then the method comprises at least one of alerting a user that the stored record or database is inaccurate or automatically updating the position/location of the object in the stored record or database based on or to reflect the position/location of the object from the formed record, inventory or itemization. Thus, method 100 enables existing records or databases of locations of objects, such as items of street furniture to be updated, corrected and validated.

While in some examples, the method 100 can be used to validate the position, location or identification of an object in other examples, the method 100 can be used to confirming the condition, status or state of repair of an object. In these examples the trained multi-model large language model is trained to identify a condition of the one or more objects in addition to providing the identification and position/location of the one or more objects. The training the multi-model large language model to identify a condition of one or more objects can comprise providing the multi-model large language model with training data comprising pairs comprising images of objects and written descriptions of the objects, their positions and their conditions. In other examples, the condition of the object can be found using comparison with similarly aged and positioned equipment with known conditions. When the multi-modal large language model is trained to also identify a condition of one or more objects, the output text received in stage 130 can further identify the condition of the one or more objects in addition to identifying the one or more objects and their position.

Stage 150 of querying the object can further comprise querying a condition of an object of the one or more objects. In some examples, this query is processed based on the condition information from the record, inventory or itemization of the environment. If according to the record, inventory or itemization, the condition is poor then a warning or other form of alert message is sent to a user indicating repairs are required to the object. In other examples, the query is processed by monitoring how a condition compares to an expected condition of the object. In this example the identified condition from the record, inventory or itemization can be compared with a previously stored condition which reflects a previously determined condition of the object or a desired condition of the object. If the condition of the object from the record, inventory or itemization has deteriorated beyond a threshold amount compared to the stored condition, then the user can be alerted via a warning to indicate the object needs replacement or repair. In some examples the threshold amount reflects the object deteriorating to the point it becomes dangerous or no longer functions. In other examples, the threshold amount can reflect that the object will becoming dangerous or stop functioning within a set time if the object is not repaired or replaced.

The above example can be used in environment 200 to monitor computing devices and telecommunications devices and to look for physical signs that the computing devices or telecommunications devices are deteriorating and thus likely to fail. The above example can also be used in an outdoor environment 300. In such a case, engineer photos of, for example, telephone poles or street cabinets can be analysed to validate the condition of such equipment. Such photos are often taken when an engineer visits a pole or street cabinet. Thus, these images can be used for an additional purpose of ensuring the equipment visited has not deteriorated. In other examples, public or other user photos e.g. uploaded to the internet can be used to monitor the condition of street furniture and confirm whether it has deteriorated. Local authorities can use this to monitor street furniture and replace it efficiently without requiring human monitoring. Similarly the object detected could comprise a dropped kerb and the images can be taken from e.g. traffic cameras. In such a case, the dropped kerb can be monitored for deterioration to enable the dropped kerb to be efficiently repaired and maintain the useability of crossings for people in wheelchairs or people with prams/buggies.

As mentioned above, the method 100 is used to build a record, inventory or itemization of the environment 200, 300. In some examples, it can be beneficial to have a record, inventory or itemization of the environment that can be updated with time or linked to time. In this regard, the image of the environment shows the environment at a first date and/or time. The image can be linked to the first date and/or time via a timestamp of the image, via user inserted data indicating the date and/or time or via any other suitable technique. The record, inventory or itemization of the environment can further comprise a timestamp indicating the first date and/or time. This timestamp can come from a timestamp of the image, a user inserted date and/or time or in any other suitable fashion. In some examples the timestamp may be output from the multi-modal large language model e.g. by the multi-modal machine learning model being trained to extract a time from an image either using conditions such as lighting conditions in the image or a clock or watch in the image. In other examples the timestamp is provided directly as a timestamp of the image or user inserted data.

When the record, inventory or itemization comprises a timestamp associated with the image then the querying the record, inventory or itemization can comprise querying the record, inventory or itemization to determine a time and/or date at which the one or more objects were identified as being in the corresponding positions using the timestamp. This enables a user to track one or more objects using the method and also allows confirmation of how the positions of the one or more objects in the environment are changing.

In some examples where timestamps are used, it may be useful to use method 100 to track changes in the environment. This enables a determination of how the condition of objects, the position of objects and the identity of objects is changing. To this end, method 100 can further comprise, receiving a second image of the environment, the second image of the environment showing the environment at a second date and/or time different from the first date and/or time, providing the second image of the environment to the trained multi-modal large language model, and receiving from the multi-modal large language model a second output text identifying one or more objects and a position of the one or more objects within the environment at the second date and/or time. The method can then comprise in some examples forming a second record, inventory or itemization of the environment using the second output text of the multi-modal large language model, wherein the second record, inventory or itemization of the environment comprises an identification of the one or more objects in the environment, the position of the one or more objects in the environment, and a second timestamp indicating the second date and/or time. In other examples, the method can comprise updating the record, inventory or itemization to include further entries about the one or more objects wherein the further entries comprise a further identification of the one or more objects, the position of the one or more objects at the second date and/or time and a second timestamp indicating the second date and/or time. In examples where the condition of the one or more objects are being tracked, the second record, inventory or itemization or the further entries of the record, inventory or itemization can also comprise a condition of each of the one or more objects.

In the above cases, the method can further comprise querying the second record, inventory or itemization and/or the original record, inventory or itemization by comparing the second record with the original record or the new entries in the original record with the original entries to determine a change in the one or more objects. These changes can comprise an appearance of one or more objects, a disappearance of one or more objects, a change in condition of one or more objects or a change in position or location of one or more objects. For example, in the case of computing or telecommunications environment 200, the addition or removal of a computing or telecommunications device or the movement of a computing or telecommunications device can be detected. In the case of outdoor environment 300, then changes in condition of objects such as street furniture as well as street furniture going missing or otherwise being lost due to theft or weather conditions can be detected. The timestamped records can also enable a user to confirm no unexpected objects have appeared to disappeared.

In some examples, if an image of an object is taken every time the object is serviced then the timestamps associated with the images can be used to determine the last time an object was serviced and how often the object was serviced to confirm the object is being serviced sufficiently. This can be used for many different objects but may find use where the object is a computing or telecommunications device or where the object is a telephone pole or street cabinet. Thus, in such an example the querying the record can comprise determining when a last record or record entry was generated and/or how often a new record or record entry is generated.

In a summary, examples of the present application relate to using a multi-modal large language model to process images of an environment to provide an output text describing objects in the environment. This output text is used to form a text record of the environment which may take the form of a list, table, database or any other suitable data structure. The record can then be queried to determine information about the objects in the environment. This can be used for example to confirm that all computing or telecommunications devices in an environment are the expected devices. This can also be used to locate outdoor objects such as street furniture to provide accurate indications of the location of these objects for example from publicly available photographs. This can be used to validate existing records of locations of outdoor objects and also to provide information about where facilities e.g. benches or telephone poles are located to enable people to more easily locate these objects.

As described in more detail below, the computer implemented method 100 of Figure 1 may be implemented on a computing device comprising a processor and a memory configured to store instructions that when executed cause the processor to implement the method of Figure 1 and other methods discussed herein. The application also relates to a non-transitory computer-readable storage medium storing instructions that when executed by a processor cause the process or implement the method of Figure 1 and other methods discussed herein.

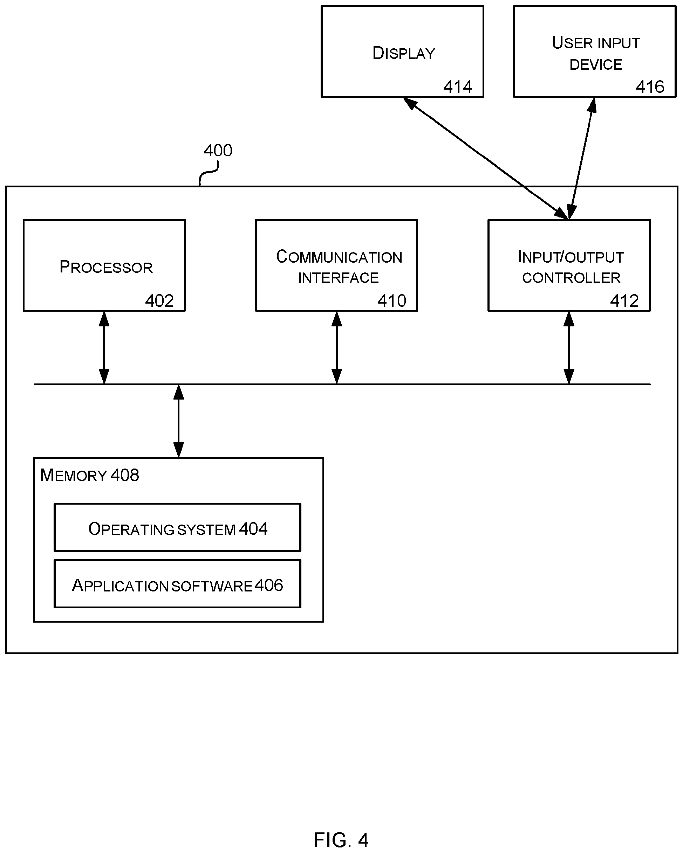

Figure 4 illustrates various components of an example computing device 400 in which embodiments of the method of Figure 1 and other methods described above are implemented in some examples. The computing device is of any suitable form such as a smart phone, a desktop computer, an unmanned aerial vehicle, a tablet computer, or a laptop computer.

The computing device 400 comprises one or more processors 402 which are microprocessors, controllers or any other suitable type of processors for processing computer executable instructions to control the operation of the device in order to perform the methods of Figure 1 and other methods described herein. In some examples, for example where a system on a chip architecture is used, the processors 402 include one or more fixed function blocks (also referred to as accelerators) which implement a part of the method of Figure 1 and other methods described herein in hardware (rather than software or firmware). That is, the methods described herein are implemented in any one or more of software, firmware, or hardware. The computing device has a data store holding computer readable instructions to implement a method according to Figure 1 or other method described herein. The computing device can implement a multi-modal large language model or this can be implemented outside the computing device and the computing device can send/receive data to/from the multi-modal large language model. Platform software comprising an operating system 404 or any other suitable platform software is provided at the computing-based device to enable application software 406 to be executed on the device. Although the computer storage media (memory 408) is shown within the computing-based device 400 it will be appreciated that the storage is, in some examples, distributed or located remotely and accessed via a network or other communication link (e.g. using communication interface 410).

The computing-based device 400 also comprises an input/output controller 412 arranged to output display information to a display device 414 which may be separate from or integral to the computing-based device 400. The display information may provide a graphical user interface. The input/output controller 414 is also arranged to receive and process input from one or more devices, such as a user input device 416 (e.g. a mouse, keyboard, camera, microphone or other sensor). In some examples the user input device 416 detects voice input, user gestures or other user actions. In an embodiment the display device 416 also acts as the user input device 414 if it is a touch sensitive display device. The input/output controller 416 outputs data to devices other than the display device in some examples.

Any reference to 'an' item refers to one or more of those items. The term 'comprising' is used herein to mean including the method blocks or elements identified, but that such blocks or elements do not comprise an exclusive list and an apparatus may contain additional blocks or elements and a method may contain additional operations or elements. Furthermore, the blocks, elements and operations are themselves not impliedly closed.

The steps of the methods described herein may be carried out in any suitable order, or simultaneously where appropriate. The arrows between boxes in the figures show one example sequence of method steps but are not intended to exclude other sequences or the performance of multiple steps in parallel. Additionally, individual blocks may be deleted from any of the methods without departing from the spirit and scope of the subject matter described herein. Aspects of any of the examples described above may be combined with aspects of any of the other examples described to form further examples without losing the effect sought. Where elements of the figures are shown connected by arrows, it will be appreciated that these arrows show just one example flow of communications (including data and control messages) between elements. The flow between elements may be in either direction or in both directions.

Where the description has explicitly disclosed in isolation some individual features, any apparent combination of two or more such features is considered also to be disclosed, to the extent that such features or combinations are apparent and capable of being carried out based on the present specification as a whole in the light of the common general knowledge of a person skilled in the art, irrespective of whether such features or combinations of features solve any problems disclosed herein. In view of the foregoing description it will be evident to a person skilled in the art that various modifications may be made within the scope of the invention.

## Claims

1. A computer implemented method comprising:
receiving an image of an environment;
providing the image of the environment to a trained multi-modal large language model, the trained multi-modal large language model trained to identify one or more objects within the image of the environment and a position of each of the one or more objects within the image, and output output text identifying the one or more objects and the positions of the one or more objects within the environment;
receiving from the multi-modal large language model the output text identifying the one or more objects and the position of the one or more objects within the environment;
forming a record of the environment using the output text of the multi-modal large language model, wherein the record of the environment comprises an identification of the one or more objects in the environment and the position of the one or more objects in the environment;
querying the record to determine an identity and/or a position of an object of the one or more objects.

2. The computer-implementation method of claim 1, wherein:
the trained multi-modal large language model is further trained to identify a condition of the one or more objects within the image of the environment;
the output text further identifies the condition of the one or more objects;
the record further comprises an identification of the condition of the one or more objects;
the querying the record to determine the identity or the position of an object of the one or more objects further comprises querying the record to determine the condition of an object of the one or more objects by comparing the identified condition of the object to a stored record indicating an expected condition of the object; and the method further comprises
if the identified condition of the object has deteriorated from the expected condition of the object beyond a threshold amount, outputting a warning that the object needs replacement or repair.

3. The computer-implemented method of claim 1 or claim 2, wherein:
the image of the environment shows the environment at a first date and/or time;
the record of the environment further comprises a timestamp indicating the first date and/or time; and
querying the record to determine an identity and/or a position of an objection of the one or more objects further comprises querying the record to determine the timestamp associated with the identity or position of the object.

4. The computer-implemented method of claim 3, further comprising:
receiving a second image of the environment, wherein the second image of the environment shows the environment at a second date and/or time different from the first date and/or time;
providing the second image of the environment to the trained multi-modal large language model;
receiving from the trained multi-modal large language model a second output text identifying one or more objects and a position of the one or more objects within the environment at the second date and/or time;
forming a second record of the environment using the second output text of the trained multi-modal large language model, wherein the second record of the environment comprises an identification of the one or more objects in the environment, the position of the one or more objects in the environment, and a second timestamp indicating the second date and/or time; and
comparing the second record and the record to determine a change in the one or more objects in the environment.

5. The computer-implemented method of any previous claim, wherein:
the environment comprises an environment housing one or more computing devices and/or telecommunications devices;
the trained multi-modal large language model is trained to identify the one or more computing devices and/or telecommunications devices and a position for each of the one or more computing devices and/or telecommunications devices;
the output text identifies the one or more computing devices and/or telecommunications devices and the position of the one or more computing devices and/or telecommunications devices;
the record of the environment comprises the identification of the one or more computing devices and/or telecommunications devices and the position for each of the one or more computing devices and/or telecommunications devices;
the querying the record to determine the identity or the position of an object of the one or more objects comprises comparing an identity of a computing device or telecommunications device at a particular position as indicated by the record of the environment with an identity of the computing device or telecommunications device at the particular position as indicated by a stored record of the environment, wherein the stored record of the environment indicates an expected identity of computing devices and/or telecommunications devices in each position; and
the computer-implemented method further comprises in response to the identity of the computing device or telecommunications device not matching an expected identity of the computing device or telecommunications device at the particular position, outputting a warning that the computing device or telecommunications device is incorrect or may not function as expected.

6. The computer-implemented method of claim 5, wherein:
the environment comprises a telephone exchange; and
the one or more objects comprise telephone switches and computing devices that implement telephone exchange functionality.

7. The computer-implemented method of any of claims 1 to 4, wherein:
the environment comprises an outdoor environment comprising one or more items of street furniture;
the trained multi-modal large language model is trained to identify the one or more items of street furniture and a position for each of the one or more items of street furniture;
the output text identifies the one or more items of street furniture and the position of each of the one or more items of street furniture;
the record of the environment comprises the identification of the one or more items of street furniture and the position for each of the one or more items of street furniture; and
the querying the record to determine the identity or the position of an object of the one or more objects comprises requesting a position of an item of street furniture of the one or more items of street furniture.

8. The computer-implemented method of claim 7, wherein the one or more items of street furniture comprise at least one of:
a telephone pole,
a telephone box,
a street cabinet, telephone street cabinet, or junction box, and
a mobile phone mast and its attached equipment.

9. The computer-implemented method of any previous claim, wherein querying the record to determine an identity and/or a position of an object of the one or more objects further comprises:
comparing the position of the object to a position of the object in a stored record; and
in response to the position of the object not matching the position of the object in the stored record, either automatically updating the stored record or providing a warning indicating that the stored record is incorrect and should be updated.

10. The computer-implemented method of any previous claim further comprising:
training the multi-modal large language model using training data comprising training data pairs, wherein each training data pair comprises an image and text identifying one or more objects in the image and a position of each of the one or more objects in the image.

11. The computer-implemented method of any previous claim, wherein the trained multi-modal large language model comprises:
a trained convolutional neural network trained to generate embeddings from an image and configured to input the embeddings to a pretrained large language model; and
the pretrained large language model, wherein the pretrained large language model is retrained to provide an output text identifying the one or more objects in the environment and the position of the one or more objects within the environment.

12. The computer-implemented method of claim 11, wherein the trained convolutional neural network is trained to generate embeddings from an image using training data comprising data pairs each comprising an image and labels of objects in the image.

13. The computer-implemented of any previous claim, wherein the image comprises either a frame from a video captured by a video capture device or a still image captured by a camera or other imaging device.

14. A computing device comprising:
a processor; and
a memory, the memory comprising instructions that when executed by the processor cause the processor to implement a method accord to any of claims 1 to 13.

15. A non-tangible computer readable storage medium comprising instructions that when executed by a processor cause the processor to implement a method according to any of claims 1 to 15.
